# FASCICULE DE BREVET EUROPEEN

(11) **EP 2 326 854 B1**
(45) Date de publication et mention de la délivrance du brevet: **14.11.2012**
(21) Numéro de dépôt: 09748404.2
(22) Date de dépôt: 17.09.2009
(51) Int. Cl.: F16D 65/10

(54) **TAMBOUR ET MOYEU TAMBOUR DE FREIN A ECHANGE THERMIQUE PERFECTIONNE NOTAMMENT POUR VEHICULE AUTOMOBILE, ET VEHICULE EQUIPE**
VERBESSERTE TROMMEL UND TROMMELNABE FÜR EINE WÄRMEAUSTAUSCHBREMSE, INSBESONDERE FÜR EIN FAHRZEUG, UND SO AUSGESTATTETES FAHRZEUG
IMPROVED DRUM AND DRUM HUB FOR A HEAT EXCHANGE BRAKE, PARTICULARLY FOR AN AUTOMOBILE, AND THUS-FITTED VEHICLE

(30) Priorité: 25.09.2008 FR 0805274
(43) Date de publication de la demande: 01.06.2011
(73) Titulaire: Renault S.A.S., 92100 Boulogne-Billancourt (FR)
(72) Inventeur: GEY, Yves, F-72230 Guecelard (FR); CAMI, Jérémie, F-72220 Ecommoy (FR)
(86) Numéro de dépôt international: PCT/FR2009/051751
(87) Numéro de publication internationale: WO 2010/034923

(56) Documents cités:
- WO-A-2005/003586
- FR-A- 2 830 914
- GB-A- 231 909
- US-A- 2 059 170
- US-A- 3 043 631

## Description

L'invention concerne un tambour et moyeu tambour de frein à échange thermique perfectionné, notamment pour véhicule automobile et le véhicule ainsi équipé, comme connu du WO-A-2005/003586.

Les freins à tambour sont moins efficace que les freins à disque mais moins coûteux à réaliser.

Cependant, les freins à tambour sont moins endurants que les freins à disque à l'échauffement dû au freinage.

Pour remédier à cet inconvénient, certains tambours de frein comportent sur la paroi cylindrique du tambour sur la face opposée à la piste de freinage des nervures périphériques s'étendant suivant des génératrices faisant office d'ailettes permettant de refroidir le tambour et de dissiper ainsi les calories générées lors du freinage. Néanmoins, les caractéristiques de rigidité, de masse et les performances de refroidissement de tels tambours demeurent faibles.

Le but de la présente invention est d'apporter des perfectionnements aux tambours de frein connus et d'améliorer les performances des freins à tambour des véhicules.

Il est en effet proposé un tambour de frein de roue pour véhicule automobile comprenant les caractéristiques de la revendication 1.

Les dites nervures faciales sont avantageusement radiales et régulièrement réparties autour dudit axe de rotation.

Ce tambour de frein de roue comporte en outre au moins une série de nervures périphériques externes sensiblement transversales aux précédentes en périphérie du tambour (disposées sur la face extérieure du tambour opposée à la dite piste de freinage).

Le tambour peut comporter des nervures faciales internes et/ou externes. Elles contribuent à augmenter largement la rigidité du tambour relativement à un voile classique du tambour et augmentent la surface d'échange avec l'air environnant et donc favorisent la dissipation de l'énergie calorique emmagasinée par le tambour au freinage.

Le tambour peut comporter des nervures faciales identiques l'une à l'autre et régulièrement disposées autour dudit axe de rotation sur le tambour, et de même pour les nervures à la périphérie du tambour.

Les nervures faciales et de périphérie ont un profil aérodynamique apte à véhiculer lors de leur rotation l'air capturé par celles-ci en sorte que l'échange thermique du tambour avec l'air environnant est encore accru. Leur effet se combinent de façon cumulative, en un échappement d'air latéral vers les sorties de la roue avec une aspiration centrale.

Leur section peut ainsi être effilée vers l'extérieur, ce qui est propice à chasser l'air vers l'extérieur (vers l'extrémité externe de la nervure).

Elles peuvent être par exemple de section en V ou hexagonale effilée vers l'extérieur, être profilées rectilignes ou courbes sur leur longueur (éventuellement avec une extrémité extérieure périphérique arrondie ou inclinée).

Les nervures faciales peuvent s'étendre du bord du moyeu attenant de la roue au bord de circonférence externe du tambour.

Un tambour selon l'invention est avantageusement issu de fonderie monobloc et usiné, donc sans ajout de pièce rapportée. Il peut en outre comporter au moins une nervure circulaire de même axe que le tambour, celle-ci pouvant être judicieusement disposée sur la surface du tambour pour d'une part augmenter sa rigidité et l'échange thermique et, d'autre part, protéger la fabrication des nervures faciales et périphériques issues de fonderie.

Par ailleurs, l'augmentation de la rigidité d'un tel tambour et l'usinage d'équilibrage du larmier plutôt que la frette permet d'alléger sa masse relativement à un tambour classique de même diamètre (jusqu'à 15-20 % de masse) en conservant des prestations thermique et de déformation équivalentes.

Naturellement, l'invention concerne également le moyeu tambour de frein (moyeu intégré au tambour), et le véhicule équipé d'un moyeu tambour ou tambour de frein tel que définis précédemment.

L'invention est illustrée ci-après à l'aide d'exemples de réalisation et en référence aux dessins annexés sur lesquels :
- la figure 1 est une vue en perspective d'un moyeu tambour de frein à rainures radiales connu,
- la figure 2 est une vue en perspective d'un moyeu tambour de frein selon l'invention, et
- la figure 3 est une vue d'un moyeu tambour de frein selon l'invention comportant des nervures internes.

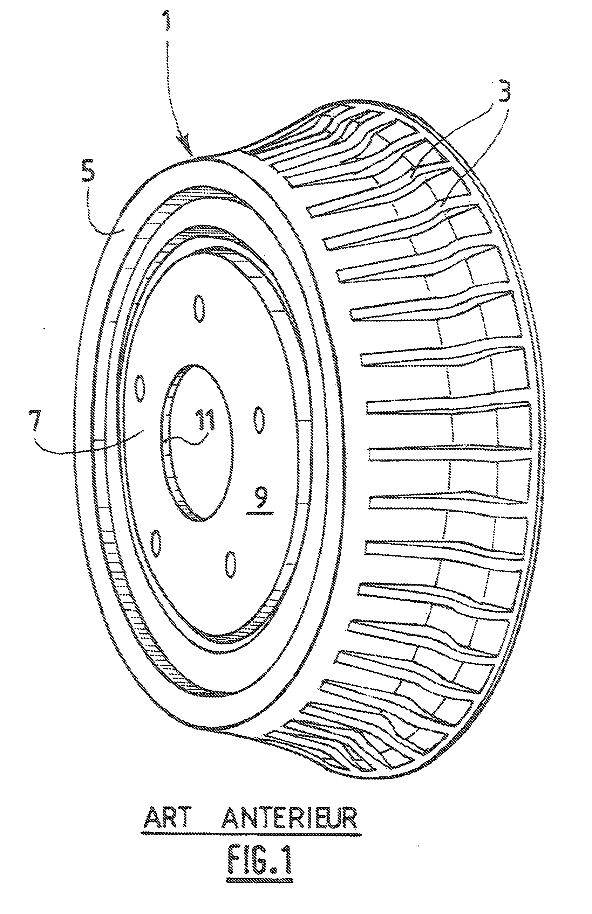

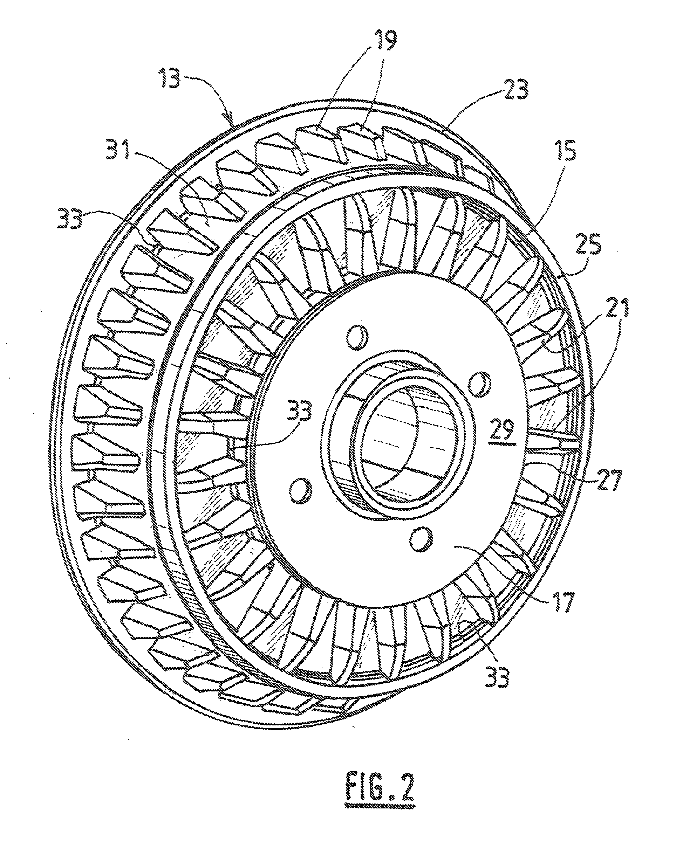

A la figure 1, on a représenté un moyeu tambour de frein 1 à nervures en périphérie 3 connu. La partie tambour proprement dite 5 est intégrée à la partie moyeu de roue 7 et le tout ou moyeu tambour 1 est formé en une seule pièce à symétrie axiale. La partie tambour 5 est pourvue d'une piste de freinage cylindrique (non représentée), et de nervures périphériques externes 3 s'étendant sur sa largeur en périphérie à l'opposé de la piste de freinage. La partie moyeu 7 est coaxiale à la partie tambour 5 et comporte un disque 9 qui reçoit la fusée de roue (non représentée) par son ouverture circulaire centrale 11. Les nervures périphériques 3 outre qu'elles rigidifient la partie tambour 5, contribuent également à la dissipation de l'énergie calorique de freinage de la partie tambour. Néanmoins cette dissipation d'énergie peut être augmentée par un moyeu tambour 13 selon l'invention, tel que représenté à la figure 2.

De même qu'à la figure 1, la partie tambour 15 est intégrée à la partie moyeu 17 de la roue, formant ainsi un moyeu tambour cylindrique 13 en une seule pièce.

La partie tambour 15 comporte des nervures supérieures périphériques 19 et des nervures radiales (faciales) externes latérales 21 régulièrement réparties autour de l'axe de rotation du moyeu tambour.

Les nervures radiales s'étendent sur la largeur de la partie tambour à sa périphérie externe, sensiblement du bord intérieur circulaire jusqu'au bord extérieur latéral de la partie tambour 15.

Les nervures radiales 21 s'étendent depuis le bord circulaire externe 27 de la partie moyeu 17 jusqu'au bord extérieur latéral 25 de la partie tambour 15, sensiblement dans un plan parallèle au disque circulaire 29 de la partie moyeu 17.

Les nervures radiales 21 s'étendent transversalement aux nervures périphériques 19. Ces dernières sont disposées régulièrement sur une surface périphérique cylindrique 31 de la partie tambour coaxiale au moyeu (opposée à la piste de freinage). Elles s'étendent longitudinalement chacune dans un plan passant par l'axe du moyeu tambour ou selon une génératrice de cette surface cylindrique 31.

Ces nervures périphériques 19 et radiales 21 ont un profil effilé vers le bord extérieur latéral 15 du moyeu tambour et leur section est trapézoïdale de petite base extérieure, se terminant par une extrémité droite inclinée et une extrémité courbe respectivement, relativement aux nervures périphériques 19 et aux nervures radiales 21.

Les profils de ces nervures lors de la rotation de la roue et donc du moyeu tambour, véhiculent l'air environnant ainsi que des ailettes pour refroidir le moyeu tambour. Le flux d'air véhiculé par les nervures radiales 21 et le flux d'air véhiculé par les nervures périphériques 19 se combinent de façon cumulative pour provoquer un échappement d'air vers les sorties latérales de la roue équipée du moyeu tambour avec une aspiration d'air centrale.

Le moyeu tambour 13 comporte également des nervures circulaires 33 formées notamment à la base des nervures 19, 21. Ces nervures 33 sont coaxiales à la partie tambour Elles augmentent également la rigidité du moyeu tambour et ajoutent à l'échange thermique avec l'air. De plus, elles facilitent la confection de moulage des nervures radiales 21 et périphériques 19.

Un tel moyeu tambour peut être issu de fonderie, par exemple en fonte ou en aluminium, ou d'usinage de matériaux de préférence métalliques.

Naturellement, la partie tambour 15 peut être dissociée de la partie moyeu 17 de la roue, pouvant être fixée à celle-ci par vissage ou autre moyen.

On notera enfin que l'équilibrage du tambour ou du moyeu tambour peut être obtenu par usinage du larmier ou gorge périphérique intérieure qui protège des ruissellements d'eau en roulement à la manière d'une gouttière (non représentée), ce qui permet de réduire la masse du tambour ou du moyeu tambour relativement à celle réservée sur la frette.

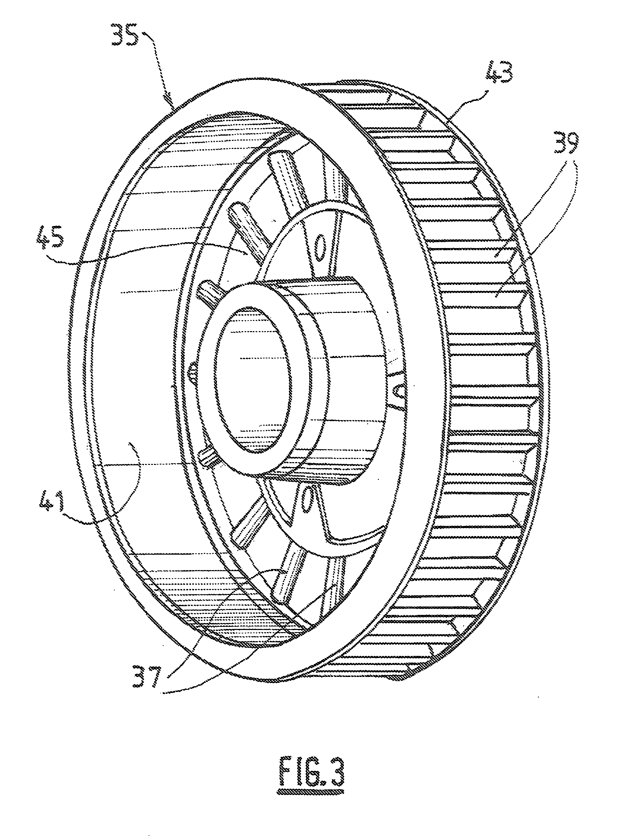

On a représenté à la figure 3, à titre de variante de réalisation, un moyeu tambour 35 comportant des nervures radiales internes 37 et des nervures périphériques externes 39, à l'opposé de la piste de freinage interne 41. Ces nervures radiales 37 augmentent également la rigidité du tambour et sa capacité de refroidissement à l'échauffement. Naturellement, des nervures radiales externes non représentées peuvent également être formées sur la paroi de la partie tambour 43 opposée à celle 45 comprenant les nervures radiales internes 37.

Enfin, les nervures faciales ne sont pas nécessairement radiales et peuvent être formées selon une autre géométrie, par exemple inclinées angulairement relativement au rayon et avec tout profil permettant de véhiculer entre elles de l'air en vue du refroidissement du tambour ou moyeu tambour.

Pour solutionner les vibrations nuisibles au bon fonctionnement du frein à tambour, on pourra faire varier les formes et les écartements des nervures radiales et périphériques sur un même tambour ; avec un pas et des formes variables ou régulières de nervures radiales et périphériques.

## Revendications

1. Tambour de frein de roue (15, 43) pour véhicule automobile comprenant une piste de freinage (41) cylindrique qui est raccordée à une paroi circulaire perpendiculaire à l'axe de rotation du tambour, l'une des faces (45) de cette paroi comprenant des nervures dites faciales (21, 37) réparties autour du dit axe de rotation, comportant des nervures périphériques externes (19, 39) disposées sur la face extérieure du tambour opposée à la dite piste de freinage (41), **caractérisé en ce que** les nervures faciales (21) et périphériques (19) ont un profil aérodynamique apte à véhiculer lors de leur rotation l'air capturé par celles-ci, en sorte que l'échange thermique du tambour avec l'air environnant est accru et que les flux d'air véhiculés par ces nervures se combinent de façon cumulative en un échappement d'air latéral vers les sorties de la roue avec une aspiration centrale.

2. Tambour de frein (15, 43) selon la revendication 1, **caractérisé en ce que** les nervures faciales (21, 37) sont radiales et régulièrement réparties autour dudit axe de rotation.

3. Tambour de frein (15, 43) selon la revendication 1 ou 2, **caractérisé en ce qu'**il comporte des nervures faciales (21) disposées sur la face extérieure de la dite paroi et/ou des nervures faciales (37) disposées sur la face intérieure (45) de la dite paroi.

4. Tambour de frein (15, 43) selon l'une quelconque des revendications précédentes, **caractérisé en ce que** les nervures périphériques externes (19, 39) sont disposées régulièrement autour dudit axe de rotation.

5. Tambour de frein (15) selon l'une quelconque des revendications précédentes, **caractérisé en ce que** lesdites nervures faciales (21) et/ou périphériques (19), sont de section affilée vers l'extérieur.

6. Tambour de frein (15) selon l'une quelconque des revendications précédentes, **caractérisé en ce qu'**il comporte au moins une nervure circulaire (33) coaxiale au tambour (15).

7. Moyeu tambour de frein (13, 35), **caractérisé en ce qu'**il comporte un tambour de frein (15, 43) selon l'une des revendications 1 à 6 et une partie moyeu de roue (17) formées en une seule pièce.

8. Véhicule comprenant au moins un tambour de frein (15, 43) selon l'une quelconque des revendications 1 à 7.

## Claims

1. Automobile wheel brake drum (15, 43) comprising a cylindrical braking track (41) coupled with a circular wall perpendicular to the rotational axis of the drum, one of the faces (45) of said wall comprising so-called facial ribs (21, 37) distributed about said rotational axis, and comprising external peripheral ribs (19, 39) arranged on the external face of the drum opposing said braking track (41), **characterized in that** the facial ribs (21) and peripheral ribs (19) have an aerodynamic profile capable of transporting the air captured thereby during the rotation thereof, such that the thermal exchange of the drum with the surrounding air is increased and that the flows of air transported by said ribs are combined cumulatively to produce an escape of air laterally toward the outlets of the wheel with central suction.

2. Brake drum (15, 43) according to Claim 1, **characterized in that** the facial ribs (21, 37) are radial and distributed uniformly about said rotational axis.

3. Brake drum (15, 43) according to Claim 1 or 2, **characterized in that** it comprises facial ribs (21) arranged on the external face of said wall and/or facial ribs (37) arranged on the internal face (45) of said wall.

4. Brake drum (15, 43) according to any one of the preceding claims, **characterized in that** the external peripheral ribs (19, 39) are arranged uniformly about said rotational axis.

5. Brake drum (15) according to any one of the preceding claims, **characterized in that** said facial ribs (21) and/or peripheral ribs (19) are of tapered section toward the outside.

6. Brake drum (15) according to any one of the preceding claims, **characterized in that** it comprises at least one circular rib (33) coaxial with the drum (15).

7. Brake drum hub (13, 35), **characterized in that** it comprises a brake drum (15, 43) according to one of Claims 1 to 6, and a wheel hub part (17) formed in one piece.

8. Vehicle comprising at least one brake drum (15, 43) according to any one of Claims 1 to 7.

## Patentansprüche

1. Rad-Bremstrommel (15, 43) für ein Kraftfahrzeug, die eine zylindrische Bremsbahn (41) enthält, die mit einer kreisförmigen Wand lotrecht zur Drehachse der Trommel verbunden ist, wobei eine der Seiten (45) dieser Wand so genannte stirnseitige Rippen (21, 37) aufweist, die um die Drehachse verteilt sind, und äußere Umfangsrippen (19, 39) aufweist, die auf der Außenseite der Trommel entgegengesetzt zur Bremsbahn (41) angeordnet sind, **dadurch gekennzeichnet, dass** die stirnseitigen Rippen (21) und Umfangsrippen (19) ein aerodynamisches Profil haben, das bei ihrer Drehung die von ihnen eingefangene Luft transportieren kann, so dass der Wärmeaustausch der Trommel mit der Umgebungsluft verstärkt ist, und dass die von diesen Rippen transportierten Luftströme sich kumulativ in einer seitlichen Luftabfuhr zu den Auslässen des Rads mit einer zentralen Ansaugung kombinieren.

2. Bremstrommel (15, 43) nach Anspruch 1, **dadurch gekennzeichnet, dass** die stirnseitigen Rippen (21, 37) radial und gleichmäßig um die Drehachse verteilt sind.

3. Bremstrommel (15, 43) nach Anspruch 1 oder 2, **dadurch gekennzeichnet, dass** sie stirnseitige Rippen (21), die auf der Außenseite der Wand angeordnet sind, und/oder stirnseitige Rippen (37) aufweist, die auf der Innenseite (45) der Wand angeordnet sind.

4. Bremstrommel (15, 43) nach einem der vorhergehenden Ansprüche, **dadurch gekennzeichnet, dass** die äußeren Umfangsrippen (19, 39) gleichmäßig um die Drehachse angeordnet sind.

5. Bremstrommel (15) nach einem der vorhergehenden Ansprüche, **dadurch gekennzeichnet, dass** die stirnseitigen Rippen (21) und/oder Umfangsrippen (19) einen sich nach außen verjüngenden Querschnitt haben.

6. Bremstrommel (15) nach einem der vorhergehenden Ansprüche, **dadurch gekennzeichnet, dass** sie mindestens eine Kreisrippe (33) koaxial zur Trommel (15) aufweist.

7. Bremstrommelnabe (13, 35), **dadurch gekennzeichnet, dass** sie eine Bremstrommel (15, 43) nach einem der Ansprüche 1 bis 6 und einen Radnabenteil (17) aufweist, die aus einem Stück geformt sind.

8. Fahrzeug, das mindestens eine Bremstrommel (15, 43) nach einem der Ansprüche 1 bis 7 aufweist.
